# EUROPÄISCHE PATENTSCHRIFT

(11) **EP 2 457 965 B1**
(45) Veröffentlichungstag und Bekanntmachung des Hinweises auf die Patenterteilung: **31.12.2014**
(21) Anmeldenummer: 11009258.2
(22) Anmeldetag: 22.11.2011
(51) Int. Cl.: C09D 167/00, C09D 7/12

(54) **VERFAHREN ZUR HERSTELLUNG EINES LACKES**
METHOD FOR PRODUCING A VARNISH
PROCÉDÉ DE FABRICATION D'UNE LAQUE

(30) Priorität: 29.11.2010 DE 102010052617
(43) Veröffentlichungstag der Anmeldung: 30.05.2012
(73) Patentinhaber: Heinz-Glas GmbH & Co. KGaA, 96355 Kleintettau (DE)
(72) Erfinder: Rebhan, Helmut, 96317 Kronach (DE)
(74) Vertreter: Schneider, Andreas

(56) Entgegenhaltungen:
- EP-A2- 0 238 166
- WO-A1-94/21387
- US-A- 4 338 233

## Beschreibung

Die Erfindung betrifft ein Verfahren zur Herstellung eines thermisch härtenden Lackes zum Spritzlackieren von Glas, einschließlich Behälterglas und Flachglas.

Thermisches Härten findet üblicherweise in gasbeheizten, mit Wärmetauschern versehenen Durchlauföfen, aber auch in elektrisch beheizten Kammeröfen statt. Die Trocknungswärme hat hierbei unterschiedliche Funktionen. Zum einen werden, bedingt durch den Temperaturanstieg bis zu der Endtemperatur, Lösemittel aus dem aufgebrachten Lackfilm abgegeben. Zum anderen beginnt ab einem bestimmten Zeitpunkt die Reaktion der Aktivatoren. Schlußendlich wird die Endvernetzung des Lackfilmes realisiert.

Insbesondere betrifft die Erfindung ein Verfahren zur Herstellung eines thermisch härtenden Lackes zum Spritzlackieren von Kosmetikglas, beispielsweise zu Dekorationszwecken.

Für einen solchen Anwendungszweck ist ein spritzfähiger Lack mit hohem Feststoffgehalt erforderlich. Häufig werden hierzu wassermischbare Einkomponentenlacke verwendet. Unter einem hohen Feststoffgehalt wird bei wassermischbaren Lacken üblicherweise ein Feststoffgehalt von wenigstens 30 % verstanden.

Wassermischbare Einkomponentenlacke bestehen im wesentlichen aus einer Basis und einem Lösemittel. Die Basis umfaßt dabei Bindemittel (häufig Polyester), Filmbildner sowie Additive. Ein hoher Feststoffgehalt ist erstrebenswert, weil damit beim Spritzlackieren eine dickere Lackschicht aufgebracht werden kann.

Besonders hohe Feststoffgehalte wurden bisher dadurch erreicht, daß der Bindemittelanteil des Lackes erhöht wurde, indem Stammbindemittel zugegeben wird. Hierdurch erhöht sich jedoch die Viskosität des Lackes. Damit der Lack wieder eine Viskosität aufweist, die zum Spritzlackieren bei Raumtemperatur geeignet ist, wird er mit Wasser verdünnt. Durch diese Verdünnung mit Wasser verringert sich die erreichbare Naßschichtstärke. Auf dem lackierten Glas entsteht ein Naßfilm mit einer Dicke von üblicherweise ca. 25 *µ*m**.** Nach dem Trocknen verbleibt ein ca. 12 *µ*m dicker Trockenfilm.

Sowohl dicke, als auch dünne Lackschichten weisen jeweils Vor- und Nachteile auf. Von Nachteil bei dünnen Lackschichten ist es, daß kraterförmige Vertiefungen an der Glasoberfläche entstehen können, die oft mit bloßen Auge nicht erkennbar sind. Gelingt es dem Lacknaßfilm nicht, die Vertiefung durch die eigene Oberflächenspannung zu schließen, so bleibt die Vertiefung in der ausgehärteten Lackschicht. Dieser Fehler erstreckt sich sehr oft bis auf die Oberfläche des Glassubstrats und ermöglicht Feuchtigkeit, einzudringen und den Lack zu unterwandern. Feuchtigkeit kann bei ungenügender Trocknung, wie sie zum Beispiel bei zu niedriger Trockentemperatur und zu kurze Ofenzeit auftreten kann, in die nicht vollständig ausgehärtete Lackschicht eindringen. Diese nimmt Feuchtigkeit auf, quillt und löst sich vom Substrat in Form von Blasen.

Je dünner die Lackschicht, desto geringer ist auch die mechanische Resistenz gegenüber Verkratzungen. Sobald die getrocknete Lackschicht durch mechanische Beschädigung verletzt ist, unterwandert Feuchtigkeit und gegebenenfalls auch der Inhalt des Glasbehälters, beispielsweise Parfüm, die Lackschicht, die sich dann mit der Zeit ablöst.

Andererseits können dünne Lackschichten besser durchtrocknen. Je dünner die Lackschicht, um so unproblematischer ist das Entweichen der Lösemittel und um so härter und damit unempfindlicher gegenüber Stoßbelastungen ist die Lackschicht.

Dicke Lackschichten sind hingegen elastischer, so daß sie eine hohe Resistenz gegenüber Verkratzungen aufweisen. Je dicker die Lackschicht, desto resistenter ist sie auch gegenüber o.g. Einflüssen, wie Feuchtigkeit.

Nachteilig an dicken Lackschichten ist das problematischere Härten und die problematischere Endvernetzung. Auch entstehen Verbrennungen, Kantenflucht und "Läufer" um so leichter, je dicker die Lackschicht ist.

In US 4 338 233 A ist ein Verfahren zur Herstellung einer thermisch härtenden Beschichtung beschrieben, bei dem ein Polyesterharz und ein Silan in Wasser dispergiert wird.

Eine Aufgabe der vorliegenden Erfindung ist es, einen zum Spritzlackieren von Glas geeigneten Lack bereitzustellen, mit dem eine erhöhte Trockenschichtstärke erreicht werden kann und der eine hohe Abriebbeständigkeit aufweist.

Diese Aufgabe wird durch ein Verfahren nach Anspruch 1 erfüllt. Vorteilhafte Ausführungen der Erfindung sind in den Unteransprüchen angegeben.

Eine Kernidee der Erfindung ist es, einem Stammlack eine unter Verwendung eines Polyesterpulvers hergestellte Polyester-Silan-Suspension zuzugeben, in welcher Suspension das Polyesterpulver in einem flüssigen Silan fein verteilt ist. Die Zugabe der Suspension erhöht den Feststoffgehalt des Lackes, ohne daß dies zu einer Erhöhung der Viskosität des Lackes führt. Die Zugabe der Suspension kann im Gegenteil trotz der Erhöhung des Feststoffgehalts sogar zu einer Verringerung der Viskosität des Lackes führen. Als Stammlack kommt dabei vorzugsweise ein wassermischbarer Einkomponentenlack mit hohem Feststoffgehalt und einem Polyester als Bindemittel zur Anwendung.

Die Verwendung eines Stammlackes mit einem Polyester als Bindemittel ist für den Einsatzzweck des Spritzlackierens von Kosmetikglas besonders deshalb von Vorteil, weil Polyester-Lacke sehr transparent und resistent gegenüber zahlreichen Bestandteilen von Parfüm und Kosmetika sind. Grundsätzlich können aber auch Stammlacke mit anderen Bindemitteln eingesetzt werden.

Als Stammlack, der auch als Basislack oder Ausgangslack bezeichnet werden kann, wird dabei ein fertig hergestellter, gebrauchsfertiger Lack verstanden, der bereits alle ihm entsprechend seiner Rezeptur innewohnenden Eigenschaften aufweist. Für die Produktion des erfindungsgemäßen Lackes kann dieser gebrauchsfertige Stammlack von einem Lackhersteller zugekauft werden.

Mit der Erfindung wird eine niedrige Lackviskosität erreicht, so daß zum Aufbringen von Lack auf Glas das einfache und preiswerte Spritzlackierverfahren angewendet werden kann. Die Naßschichtstärke wird erhöht, ohne "Kantenflucht" zu erzeugen. Die Trockenschichtstärke und somit die Resistenz gegenüber mechanischen Einflüssen sowie chemischen Einflüssen wird erhöht, ohne die Endvernetzung zu beeinflussen. Die Lacktrocknung wird nicht negativ beeinflußt. Es ist möglich, größere Mengen Feststoffe auf das Glasprodukt aufzubringen. Der Lösemittelanteil im Lack wird nicht erhöht.

Zusammengefaßt sind die Vorteile des erhaltenen Lackes u.a. sowohl sein besonders hoher Feststoffgehalt, als auch seine niedrige Viskosität. Der Lack läßt besonders dicke Lackfilme zu und weist eine hohe Abriebbeständigkeit auf. Diese erlaubt es beispielsweise, die lackierten Produkte ohne die sonst üblichen Transportverpackungen, wie Trennstege oder Gefache, zu transportieren.

Wesentlich dabei ist, daß das verwendete Polyester in Pulverform vorliegt, so daß bei Herstellung der Suspension, in der das Polyesterpulver in dem flüssigen Silan fein verteilt ist, die Polyesterpulverteilchen von dem Silan umschlossen werden können und zwar vorzugsweise derart, daß sich eine vollständige Ummantelung der Pulverteilchen ergibt. Durch die Zugabe der Suspension zu dem Stammlack wird die Lackviskosität herabgesetzt. Zugleich wird aufgrund des Polyesteranteils der Feststoffgehalt des Lackes und damit die Trockenfilmstärke erhöht.

Mit der Erfindung kann die Schichtstärke des Trockenfilmes von 10 bis 15 *µ*m, wie bei aus den Stand der Technik bekannten Lacken üblich, auf bis zu 30 *µ*m erhöht werden. Im Ergebnis führt dies zu einer deutlichen Erhöhung der Abriebbeständigkeit des aufgetragenen Lackes. Mit der Erfindung können bereits bei einem einmaligen Lackiervorgang bessere Ergebnisse erreicht werden, als bei zweimaligem Lackieren mit bekannten Verfahren. Die hierzu verwendete Spritzlackiertechnik muß nicht abgeändert werden. Somit kann allein durch Verwendung des neuartigen Lackes und ohne Modifizierung der Lackieranlage eine deutlich verbesserte Lackqualität erzielt werden.

Im Gegensatz zu herkömmlichen Lacken, bei denen ein Silan als Reaktionspartner innerhalb des Bindemittelsystems bereits enthalten sein kann, erfolgt bei der vorliegenden Erfindung die Zugabe eines Silans zu dem gebrauchsfertigen Stammlack zusammen mit dem Polyesterpulver in Form einer Suspension. Es handelt sich dabei nicht nur um ein von dem zuvorgenannten Silan verschiedenes Silan. Das in Form der Suspension zugegebene Silan erfüllt im Lack auch einen anderen Zweck.

Im Gegensatz zu Lacken, mit denen aufgrund der Verwendung von Verdickungsmitteln hohe Schichtstärken erreicht werden können, müssen bei der vorliegenden Erfindung keine Einschränkungen hinsichtlich der Brillanz (Transparenz und Glanz) und der Parfumbeständigkeit hingenommen werden, was besonders bei Kosmetikglas von Bedeutung ist.

Ein bevorzugtes Ausführungsbeispiel der Erfindung wird nachfolgend näher erläutert.

Einem Stammlack wird anstelle von Wasser eine Polyester-Silan-Suspension zugegeben, damit er für das Spritzlackieren verwendet werden kann. Trotz der Zugabe von Feststoff erhöht sich die Gesamtviskosität des sich ergebenden Lackes nicht, bzw. verringert sich die Gesamtviskosität sogar. Dies ist auf die sehr gute Gleitwirkung des mit Silan benetzten Polymerpulvers zurückzuführen. Eine Zugabe von Wasser erfolgt überhaupt nicht mehr.

Wird durch die Zugabe der Suspension eine Verringerung der Viskosität erreicht, können auch solche Lacke zum Spritzlackieren von Glas verwendet werden, die ursprünglich eine für das Spritzlackieren zu hohe Viskosität aufweisen.

Welcher Lack als Stammlack verwendet wird, ist für die vorliegende Erfindung von untergeordneter Bedeutung. Grundsätzlich kann hierfür jedes Lacksystem verwendet werden. Wesentlich ist nur, daß es sich um ein gelöstes und nicht um ein dispersives System handelt. Im vorliegenden Fall wird ein wasserlöslicher Einkomponentenlack mit Polyester als Bindemittel und Melaminharz als Co-Bindemittel verwendet.

Vorzugsweise besteht das zur Herstellung der Suspension benötigte Polyesterpulver überwiegend aus Teilchen mit Partikelgrößen zwischen 1 *µ*m und 5 *µ*m, die bei Erreichen der Endtemperatur des Lackes schmelzen und sich daher nicht nachteilig auf die Oberflächenstruktur der Lackschicht auswirken. Vorteilhafterweise weisen mehr als 80 Prozent des Polyesterpulvers eine Korngröße zwischen 1 *µ*m und 5 *µ*m auf. Besonders vorteilhaft ist es, wenn mehr als 80 Prozent des Polyesterpulvers eine Korngröße zwischen 1 *µ*m und 3 *µ*m aufweisen. Derartige Korngrößenverteilungen werden vorzugsweise durch ein Vermahlen eines Ausgangspolyesterpulvers erreicht.

In einer Ausführungsform der Erfindung wird ein Ausgangspulver verwendet, in dem Partikelgrößen kleiner als 1 *µ*m nur mit einer Häufigkeit von etwa 2 Prozent und Partikelgrößen zwischen 5 *µ*m und 20 *µ*m mit einer Häufigkeit von mindestens 10 Prozent auftreten. Eine Ultrafeinmahlung mit einer Planeten-Mikromühle mit Zirkonoxidkugeln mit einem Kugeldurchmesser von 1,2 mm bis 1,7 mm ergeben nach einer Mahldauer von 5 bis 7 Minuten das für die Herstellung der Suspension geeignete Polyesterpulver. Es können auch andere Mühlen verwendet werden. Jedoch muß sichergestellt sein, daß damit besonders kleine Korngrößen mit einer besonders gleichmäßigen Korngrößenverteilung hergestellt werden können und daß ein zu langes Mahlen nicht zu einem Verklumpen des Pulvers führt.

Bei dem Polyesterpulver handelt es sich vorzugsweise um ein Polyester, daß demjenigen Polyester chemisch ähnelt oder mit diesem identisch ist, das als Bindemittel des Stammlackes dient. Dadurch kann einer Unverträglichkeit vorgebeugt werden.

Besonders gute Ergebnisse werden mit Pulverlackpolyestern erreicht. Unter einem Pulverlackpolyester wird ein Polyester verstanden, das als Bindemittel für sogenannte Polyesterpulverlacke dient. Bei dem verwendeten Polyester handelt es sich vorzugsweise um ein niedrigschmelzendes handelsübliches Pulverlackpolyester für Industrieanwendungen.

Der Schmelzpunkt des Polyesterpulvers liegt vorzugsweise mindestens 40 K niedriger als die Endtemperatur des Stammlackes. Damit wird sichergestellt, daß bei der Trocknung des Lackes alle mit der Suspension zugeführten Pulverteilchen schmelzen und nach der Trocknung keine Unebenheiten in der Lackschicht verbleiben. Unter der Endtemperatur des Stammlackes wird dabei die für eine vollständige Trocknung erforderliche Temperatur verstanden, bei der alle Reaktionen abgeschlossen sind und die Endvernetzung erreicht ist. Je nach verwendetem Bindemittelsystem beträgt diese Endtemperatur bei thermisch härtenden Lacken üblicherweise zwischen 140°C und 230°C. In einem besonders bevorzugten Ausführungsbeispiel der Erfindung wird ein Bindemittelsystem mit einer Endtemperatur von 180°C bis 210°C und ein Polyesterpulver mit einem Schmelzpunkt von etwas 140°C verwendet.

Die verwendeten Silane sind vorzugsweise farblos und wassermischbar. Die allgemeine Summenformel für die verwendbaren Silane lautet C₉H₂₀O₅Si (C9H20O5Si). In einer bevorzugten Ausführungsform der Erfindung werden Trialkoxysilane verwendet. Als besonders vorteilhaft hat sich die Verwendung von Trimethoxysilanen erwiesen. Die Summenformel hierfür lautet R-Si (OCH₃)₃ (R-Si (OCH3) 3).

Bei einem weiteren bevorzugten Ausführungsbeispiel handelt es sich bei dem Silan um ein farbloses, wassermischbares Silan aus der Gruppe der α) Trialkoxysilane der allgemeinen Formel R2-Si (OR**) 3. Als besonders vorteilhaft hat sich die Verwendung von 3-Glycidyloxypropyl-trialkoxysilan erwiesen.

Die genannten Silane weisen eine geringe Viskosität auf und reagieren mit Glas, nicht aber mit dem für die Suspension verwendeten Polyester. Die Verwendung anderer Silane bzw. weiterer Verbindungsklassen ist möglich. Wesentlich ist, daß das Silan das Polyesterpulver nicht anlöst. Verbindungen wie SiH₄ oder SiMe₄ sind als Lackkomponente nicht geeignet.

Zur Herstellung der Suspension wird das Polyesterpulver und das Silan vorzugsweise im Verhältnis gemischt, welches sicherstellt, daß alle Polyesterteilchen benetzt sind, ohne daß eine unnötige Verdünnung des Stammlackes durch zuviel Silan erfolgt. Vorzugsweise beträgt das Mischungsverhältnis ein Gewichtsteil Polyester zu drei Gewichtsteile Silan. Die Suspension besteht mit anderen Worten vorzugsweise aus 75 Teilen Silan und 25 Teilen Polyester, hier in Form des Polyesterpulvers. Weitere Bestandteile enthält die Suspension nicht. Zur Herstellung der Dispersion wird vorzugsweise ein Dissolver verwendet.

Die Suspension ist so hergestellt, daß kein Silan in flüssiger Form mehr vorliegt. Alle Silane haben die Polyesterkügelchen benetzt, wodurch die vergleichsweise groben Oberflächen des mechanisch zerkleinerten Polyesterpulvers besonders gleitfähig werden.

Um den Gesamt-pH-Wert des verwendeten wassermischbaren und daher alkalischen Lacksystems durch die Zugabe des Silans nicht soweit zu verringern, daß die Funktion der Entschäumer nicht mehr gewährleistet ist, wird der pH-Wert der Suspension auf einen Wert zwischen pH 4 und pH 5 angehoben, indem der Suspension vor der Zugabe zu dem Stammlack 15 bis 65 Gewichtsprozent Dipropylenglykol, vorzugsweise 2(2-Hydroxypropoxy)-1-propanol, zugegeben wird. Die Zugabe von Dipropylenglykol zu der Suspension erfolgt vorzugsweise mit Hilfe eines Dissolvers.

Dipropylenglycol zeichnet sich zum einen dadurch aus, daß es wassermischbar ist. Zum anderen handelt es sich um ein "langsames" Lösungsmittel. Es verläßt den Lackfilm also vergleichsweise spät und nicht unkontrolliert. Das ist wichtig, damit bei hohen Schichtstärken keine Blasen (Kocher) im Lackfilm entstehen.

Anstelle von 2(2-Hydroxypropoxy)-1-propanol kann auch 2,2'-Oxydi-1-propanol oder ein anderes Mitglied der Dipropylenglycol-Familie verwendet werden. Die Zugabe des Glykols zu der Suspension erfolgt erst unmittelbar vor der Zugabe der Suspension zu dem Stammlack, da eine vorherige Zugabe das in der Suspension enthaltene Polyesterpulver anlösen würde, so daß es zu Verklumpungen kommen würde.

Dem Stammlack wird vorzugsweise 3 bis 10 Gewichtsprozent der so hergestellten Suspension zugegeben. Die genau Zugabemenge ergibt sich aus der zu erreichenden Zielviskosität. Diese liegt im Bereich von 28 bis 22 Sekunden Auslaufzeit, gemessen mit einem 4 mm DIN-Becher nach DIN 53211. Das entspricht einer Viskosität von ca. 100 mPas bei 20°C. Diese Zielviskosität muß erreicht werden, um einen störungsfreien Betrieb der üblichen Spritzapparate zu gewährleisten.

Aufgrund der viskositätsverringernden Wirkung der Suspension können Stammlacke verwendet werden, die Viskositäten von über 40 Sekunden Auslaufzeit aufweisen und deren Anwendung in Spritzlackierapparaten nicht möglich wäre bzw. zu Problemen führen würde.

Die Zugabe der Suspension zu dem Stammlack erfolgt vorzugsweise unter Rühren. Der so hergestellte und durch Spritzlackieren mit üblichen Spritzlackierapparaten auf Glas aufgebrachte Lack wird thermisch gehärtet. Die Trocknung erfolgt vorzugsweise durch Umluft, kann aber auch durch Infrarotstrahlung erfolgen. Es entsteht eine vergleichsweise dicke Schicht an Naßlack, der durch den hohen Feststoffgehalt gut an dem Glas haftet. Die Naßschichtdicke liegt in einem Bereich von 50 bis 60 µm. Es entsteht keine Kantenflucht. Nach dem Trocknen entsteht eine bis zu 30 µm dicker, elastischer Lackfilm, der über eine ausgezeichnete Resistenz gegenüber mechanischen Einflüssen verfügt.

Mit der Erfindung ist es erstmals möglich, bei wassermischbaren, thermisch härtenden Lacken mit einem Feststoffgehalt von 45 bis 60 Gewichts-% bei der Anwendung auf Kosmetikglas mit einem einmaligen Spritzdurchgang Trockenschichtstärken von mehr als 35 µm zu erreichen.

Mit der Erfindung können die Vorteile verschiedener Lacksysteme in einem Lack vereint werden. Dieser Lack zeichnet sich aus durch die Dickfilm-Eigenschaften und die Abriebbeständigkeit der UV-Lacke und den vorteilhaft geringe Gehalt an VOC-Lösemitteln der wassermischbaren Lacksysteme.

## Patentansprüche

1. Verfahren zur Herstellung eines thermisch härtenden Lackes zum Spritzlackieren von Kosmetikglas zu Dekorationszwecken, **dadurch gekennzeichnet, daß** einem Stammlack eine unter Verwendung eines Polyesterpulvers hergestellte Polyester-Silan-Suspension zugegeben wird, in welcher Suspension das Polyesterpulver in einem flüssigen Silan fein verteilt ist, um den Feststoffgehalt des Lackes zu erhöhen, ohne daß dies zu einer Erhöhung der Viskosität des Lackes führt.

2. Verfahren nach Anspruch 1, bei dem der Feststoffgehalt des Lackes durch die Zugabe der Polyester-Silan-Suspension erhöht wird, wobei zugleich die Viskosität des Lackes verringert wird.

3. Verfahren nach Anspruch 1 oder 2, **dadurch gekennzeichnet, daß** es sich bei dem Polyester um ein Pulverlackpolyester handelt.

4. Verfahren nach einem der Ansprüche 1 bis 3, **dadurch gekennzeichnet, daß** der Schmelzpunkt des Polyesterpulvers mindestens 40K niedriger ist als die Endtemperatur des Stammlackes.

5. Verfahren nach einem der Ansprüche 1 bis 4, **dadurch gekennzeichnet, daß** es sich bei dem Silan um 3-Glycidyloxypropyl-trialkoxysilan handelt.

6. Verfahren nach einem der Ansprüche 1 bis 5, **dadurch gekennzeichnet, daß** die Suspension das Polyesterpulver und das Silan im Verhältnis 1 Gewichtsteil Polyesterpulver: 2,5 bis 3,5 Gewichtsteile Silan enthält.

7. Verfahren nach einem der Ansprüche 1 bis 6 **dadurch gekennzeichnet, daß** der Suspension vor der Zugabe zu dem Stammlack 15 bis 65 Gewichtsprozent Dipropylenglykol zugegeben wird.

8. Verfahren nach einem der Ansprüche 1 bis 7 **dadurch gekennzeichnet, daß** dem Stammlack 3 bis 10 Gewichtsprozent Suspension zugegeben wird.

## Claims

1. Method for producing a thermosetting varnish for the spray-painting of cosmetic glass for decorative purposes, **characterized in that** a polyester/silane suspension prepared using a polyester powder is added to a base varnish, in which suspension the polyester powder is finely dispersed in a liquid silane, in order to increase the solids content of the varnish, without this leading to an increase in the viscosity of the varnish.

2. Method according to Claim 1, wherein the solids content of the varnish is increased by the addition of the polyester/silane suspension, with the viscosity of the varnish being reduced at the same time.

3. Method according to Claim 1 or 2, **characterized in that** the polyester is a powder coating polyester.

4. Method according to any of Claims 1 to 3, **characterized in that** the melting point of the polyester powder is at least 40 K lower than the end temperature of the base varnish.

5. Method according to any of Claims 1 to 4, **characterized in that** the silane is 3-glycidyloxy-propyltrialkoxysilane.

6. Method according to any of Claims 1 to 5, **characterized in that** the suspension comprises the polyester powder and the silane in a proportion of 1 part by weight of polyester powder: 2.5 to 3.5 parts by weight of silane.

7. Method according to any of Claims 1 to 6, **characterized in that** 15 to 65 weight per cent of dipropylene glycol is added to the suspension prior to the addition to the base varnish.

8. Method according to any of Claims 1 to 7, **characterized in that** 3 to 10 weight per cent of suspension is added to the base varnish.

## Revendications

1. Procédé pour la production d'une laque durcissant thermiquement, destinée au laquage au pistolet de verre pour cosmétiques à des fins décoratives, **caractérisé en ce qu'**on ajoute à une laque de base une suspension de polyester-silane préparée avec utilisation d'une poudre de polyester, suspension dans laquelle la poudre de polyester est finement dispersée dans un silane liquide, afin d'augmenter la teneur en matière solide de la laque, sans que cela conduise à une augmentation de la viscosité de la laque.

2. Procédé selon la revendication 1, dans lequel la teneur en matière solide de la laque est augmentée par l'addition de la suspension de polyester-silane, la viscosité de la laque étant en même temps diminuée.

3. Procédé selon la revendication 1 ou 2, **caractérisé en ce que** pour ce qui est du polyester il s'agit d'un polyester pour laque en poudre.

4. Procédé selon l'une quelconque des revendications 1 à 3, **caractérisé en ce que** le point de fusion de la poudre de polyester est inférieur d'au moins 40 K à la température finale de la laque de base.

5. Procédé selon l'une quelconque des revendications 1 à 4, **caractérisé en ce que** pour ce qui est du silane il s'agit d'un 3-glycidyloxypropyl-trialcoxysilane.

6. Procédé selon l'une quelconque des revendications 1 à 5, **caractérisé en ce que** la suspension contient la poudre de polyester et le silane en un rapport de 1 partie en poids de poudre de polyester : 2,5 à 3,5 parties en poids de silane.

7. Procédé selon l'une quelconque des revendications 1 à 6, **caractérisé en ce qu'**avant l'addition à la laque de base on ajoute 15 à 65 pour cent en poids de dipropylèneglycol à la suspension.

8. Procédé selon l'une quelconque des revendications 1 à 7, **caractérisé en ce qu'**on ajoute à la laque de base 3 à 10 pour cent en poids de suspension.
